(19) **Europäisches Patentamt**
**European Patent Office**
**Office européen des brevets**

(11) **EP 4 546 918 A1**

(12) **EUROPEAN PATENT APPLICATION**
published in accordance with Art. 153(4) EPC

(43) Date of publication:
**30.04.2025 Bulletin 2025/18**

(21) Application number: **23851826.0**

(22) Date of filing: **08.08.2023**

(51) International Patent Classification (IPC):
**H04W 72/04** (2023.01)

(52) Cooperative Patent Classification (CPC):
**H04W 72/04**

(86) International application number:
**PCT/CN2023/111729**

(87) International publication number:
**WO 2024/032605 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022 CN 202210957879**

(71) Applicant: **Vivo Mobile Communication Co., Ltd.
Dongguan, Guangdong 523863 (CN)**

(72) Inventors:
• **ZHENG, Qian
Dongguan, Guangdong 523863 (CN)**
• **XIAO, Xiao
Dongguan, Guangdong 523863 (CN)**

(74) Representative: **Murgitroyd & Company
165-169 Scotland Street
Glasgow G5 8PL (GB)**

(54) **RESOURCE CONFIGURATION METHOD AND APPARATUS, TERMINAL, SERVICE BASE STATION, AND MEDIUM**

(57) This application pertains to the field of communication technologies, and discloses a resource configuration method and apparatus, a terminal, a serving base station, and a medium. The resource configuration method in embodiments of this application includes: receiving, by a UE, a first configuration sent by a serving base station, where the first configuration includes at least one SL resource pool; and obtaining, by the UE, first DCI by monitoring a PDCCH of the serving base station, where the first DCI is used to indicate an SL time-frequency resource scheduled by the serving base station, and the SL time-frequency resource comes from a target resource pool in the at least one SL resource pool.

FIG. 2

Description

CROSS-REFERENCE TO RELATED APPLICATION

This application claims priority to Chinese Patent Application No. 202210957879.3, filed in China on August 10, 2022, which is incorporated herein by reference in its entirety.

TECHNICAL FIELD

This application pertains to the field of communication technologies, and specifically relates to a resource configuration method and apparatus, a terminal, a serving base station, and a medium.

BACKGROUND

Currently, in an NR sidelink communication (sidelink communication, SL communication) transmission scenario, a current related solution only involves how a base station scheduling mode (mode 1) works. However, currently, there is no discussion on a transmission scenario in which NR SL communication and NR SL discovery coexist after introduction of a new scenario: an NR sidelink discovery (sidelink discovery) transmission scenario. In this application, it is considered that in the transmission scenario in which NR SL communication and NR SL discovery coexist, a terminal cannot work based on mode 1. Therefore, how to implement transmission of a discovery message in the NR SL discovery transmission scenario based on mode 1 is a problem to be urgently resolved in this application.

SUMMARY

Embodiments of this application provide a resource configuration method and apparatus, a terminal, a serving base station, and a medium to resolve a problem that a discovery message cannot be transmitted in an NR SL discovery transmission scenario based on mode 1.
According to a first aspect, a resource configuration method is provided. The method includes: receiving, by a user equipment UE, a first configuration sent by a serving base station, where the first configuration includes at least one sidelink SL resource pool; and obtaining, by the UE, first downlink control information DCI by monitoring a physical downlink control channel PDCCH of the serving base station, where the first DCI is used to indicate an SL time-frequency resource scheduled by the serving base station, and the SL time-frequency resource comes from a target resource pool in the at least one SL resource pool.
According to a second aspect, a resource configuration apparatus is provided. The apparatus includes a receiving module and an obtaining module. The receiving module is configured to receive a first configuration sent by a serving base station, where the first configuration includes at least one sidelink SL resource pool. The obtaining module is configured to obtain first downlink control information DCI by monitoring a physical downlink control channel PDCCH of the serving base station, where the first DCI is used to indicate an SL time-frequency resource scheduled by the serving base station, and the SL time-frequency resource comes from a target resource pool in the at least one SL resource pool.
According to a third aspect, a resource configuration method is provided. The method includes: sending, by a serving base station, a first configuration, where the first configuration includes at least one sidelink SL resource pool; and sending, by the serving base station, first downlink control information DCI on a physical downlink control channel PDCCH, where the first DCI is used to indicate an SL time-frequency resource scheduled by the serving base station, and the SL time-frequency resource comes from a target resource pool in the at least one SL resource pool.
According to a fourth aspect, a resource configuration apparatus is provided. The apparatus includes a sending module. The sending module is configured to send a first configuration to UE, where the first configuration includes at least one sidelink SL resource pool. The sending module is configured to send first downlink control information DCI on a physical downlink control channel PDCCH to the UE, where the first DCI is used to indicate an SL time-frequency resource scheduled by the serving base station, and the SL time-frequency resource comes from a target resource pool in the at least one SL resource pool.
According to a fifth aspect, a terminal is provided. The terminal includes a processor and a memory. The memory stores a program or instructions executable on the processor. When the program or instructions are executed by the processor, the steps of the method according to the first aspect are implemented.
According to a sixth aspect, a terminal is provided and includes a processor and a communication interface. The communication interface is configured to: receive a first configuration sent by a serving base station, where the first configuration includes at least one sidelink SL resource pool; and obtain first downlink control information DCI by monitoring a physical downlink control channel PDCCH of the serving base station, where the first DCI is used to indicate an SL time-frequency resource scheduled by the serving base station, and the SL time-frequency resource comes from a target resource pool in the at least one SL resource pool.

According to a seventh aspect, a serving base station is provided. The serving base station includes a processor and a memory. The memory stores a program or instructions executable on the processor. When the program or instructions are executed by the processor, the steps of the method according to the first aspect are implemented.

According to an eighth aspect, a serving base station is provided and includes a processor and a communication interface. The communication interface is configured to: send a first configuration, where the first configuration includes at least one sidelink SL resource pool; and send first downlink control information DCI on a physical downlink control channel PDCCH, where the first DCI is used to indicate an SL time-frequency resource scheduled by the serving base station, and the SL time-frequency resource comes from a target resource pool in the at least one SL resource pool.

According to a ninth aspect, a communication system is provided and includes a terminal and a serving base station. The terminal may be configured to perform the steps of the resource configuration method according to the first aspect. The serving base station may be configured to perform the steps of the resource configuration method according to the third aspect.

According to a tenth aspect, a readable storage medium is provided. The readable storage medium stores a program or instructions. When the program or instructions are executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor. The processor is configured to run a program or instructions to implement the steps of the method according to the first aspect or implement the steps of the method according to the third aspect.

According to a twelfth aspect, a computer program or program product is provided. The computer program or program product is stored in a storage medium. The computer program or program product is executed by at least one processor to implement the steps of the method according to the first aspect or implement the steps of the method according to the third aspect.

In the embodiments of this application, after the UE receives the first configuration (the first configuration includes the at least one sidelink SL resource pool) sent by the serving base station, the UE may obtain the first DCI by monitoring the PDCCH of the serving base station, to determine, based on the first DCI, the SL time-frequency resource scheduled by the serving base station, where the SL time-frequency resource comes from the target resource pool in the at least one SL resource pool. By parsing the DCI sent by the serving base station, the UE determines, from the SL resource pool configured in the first configuration, the SL time-frequency resource for an SL discovery message. In this way, the SL discovery message can be transmitted based on the SL time-frequency resource, and further, service transmission with a high QoS (quality of service) requirement can be better supported.

## BRIEF DESCRIPTION OF DRAWINGS

FIG. 1 is a schematic diagram of a possible structure of a communication system according to an embodiment of the present invention;

FIG. 2 is a schematic flowchart of a resource configuration method according to an embodiment of this application;

FIG. 3 is a first schematic diagram of a structure of a resource configuration apparatus according to an embodiment of this application;

FIG. 4 is a second schematic diagram of a structure of a resource configuration apparatus according to an embodiment of this application;

FIG. 5 is a third schematic diagram of a structure of a resource configuration apparatus according to an embodiment of this application;

FIG. 6 is a fourth schematic diagram of a structure of a resource configuration apparatus according to an embodiment of this application;

FIG. 7 is a schematic diagram of a hardware structure of a communication device according to an embodiment of this application;

FIG. 8 is a schematic diagram of a hardware structure of a terminal according to an embodiment of this application; and

FIG. 9 is a schematic diagram of a hardware structure of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

The following describes technical terms used in the technical solutions provided in the embodiments of this application.

1. Sidelink (Sidelink, SL)

Starting from Release 12, a long term evolution (Long Term Evolution, LTE) system supports a sidelink (sidelink, or translated as sidelink, side link, or the like), used for direct data transmission between user equipments (User Equipment, UE) without using a network device.

A design of an LTE sidelink is applicable to specific public safety affairs (for example, emergency communication on a fire site or a disaster site such as an earthquake), vehicle to everything (vehicle to everything, V2X) communication, or the like. Vehicle to everything communication includes various services, such as basic security communication, advanced (autonomous) driving, platooning, and sensor expansion. Because the LTE sidelink supports only broadcast communication, the LTE sidelink is mainly used for basic security communication. Other advanced V2X services with strict QoS requirements in terms of latency and reliability will be supported by a 5G NR sidelink. Specifically, NR sidelink communication includes three types of communication: unicast communication, groupcast communication, and broadcast communication.

2. Two resource allocation modes are supported for sidelink UE.

(1) Base station scheduling mode (Mode 1): A base station (Base Station, BS) schedules SL resources for a terminal to use for SL transmission. In other words, a network-side device (base station) controls and allocates resources for each UE.
(2) UE autonomous mode (Mode 2): Each UE autonomously selects resources.

3. Communication resource pool or shared resource pool (sl-TxPoolScheduling): It is a communication resource pool or a shared resource pool (the shared resource pool means that both services of NR SL communication and NR SL discovery can be transmitted in this resource pool) scheduled by the base station.
4. Discovery dedicated resource pool (sl-DiscTxPoolScheduling): It is a discovery dedicated resource pool scheduled by the base station.
5. Signaling structure of a resource pool list in TS 38.331:

A resource pool configuration in the list is indexed by using a resource pool identifier (SL-ResourcePoolID):

```
SL-ResourcePoolConfig-r16 ::=      SEQUENCE {

sl-ResourcePoolID-r16              SL-ResourcePoolID-r16,

sl-ResourcePool-r16        SL-ResourcePool-r16           OPTIONAL

-- Need M

}

SL-ResourcePoolID-r16 ::=          INTEGER (1..maxNrofPoolID-r16)
```

Currently, the related art supports an NR sidelink communication (sidelink communication, SL communication) transmission scenario, and how the base station scheduling mode (mode 1) works in this scenario has been standardized. On the other hand, a new scenario is introduced in NR Rel-17: an NR sidelink discovery (sidelink discovery) transmission scenario. However, in an NR SL discovery only scenario, or an NR SL discovery and communication transmission scenario (that is, including at least NR SL discovery), currently, a terminal cannot work based on mode 1. Therefore, how to implement transmission of a discovery message in the NR SL discovery transmission scenario based on mode 1 is an urgent problem to be resolved in this application.

In embodiments of this application, after UE receives a first configuration (the first configuration includes at least one sidelink SL resource pool) sent by a serving base station, the UE may obtain first downlink control information (Downlink Control Information, DCI) by monitoring a physical downlink control channel (Physical downlink control channel, PDCCH) of the serving base station, to determine, based on the first DCI, an SL time-frequency resource scheduled by the serving base station, where the SL time-frequency resource comes from a target resource pool in the at least one SL resource pool. By parsing the DCI sent by the serving base station, the UE determines, from the SL resource pool configured in the first configuration, the SL time-frequency resource for an SL discovery message. In this way, the SL discovery message can be transmitted based on the SL time-frequency resource, and further, service transmission with a high QoS (quality of service) requirement can be better supported.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

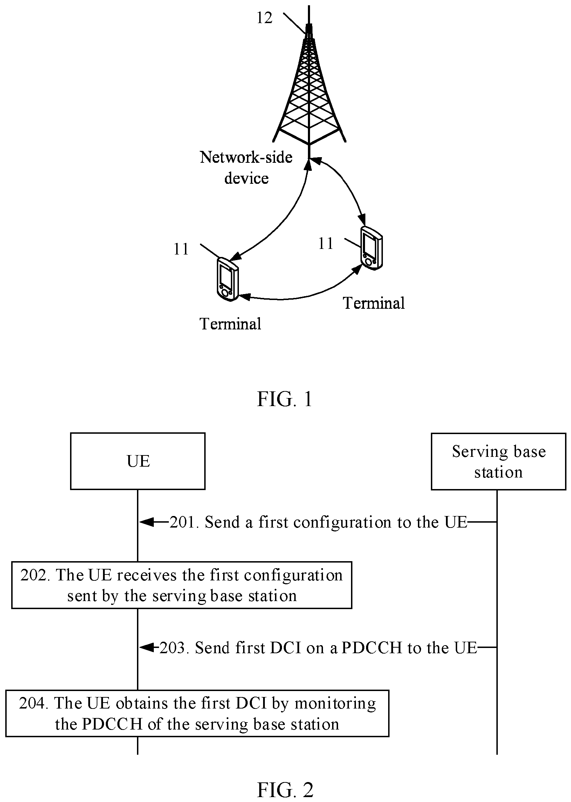

FIG. 1 is a block diagram of a wireless communication system to which an embodiment of this application may be applied. The wireless communication system includes a terminal 11 and a network-side device 12. The terminal 11 may be a terminal-side device such as UE, a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 includes a serving base station. For example, the network-side device 12 may further include an access network device or a core network device. The access network device 12 may also be referred to as a radio access network device, a radio access network (Radio Access Network, RAN), a radio access network function, or a radio access network element. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

A resource configuration method and apparatus, a terminal, a serving base station, and a medium provided in embodiments of this application are hereinafter described in detail by using some embodiments and application scenarios thereof with reference to the accompanying drawings.

FIG. 2 is a schematic flowchart of a resource configuration method according to an embodiment of this application. As shown in FIG. 2, the resource configuration method may include the following step 201 to step 204.

Step 201: A serving base station sends a first configuration to UE.

In this embodiment of this application, the UE may be SL UE. The SL UE may be in a radio resource control (Radio Resource Control, RRC) connected state, a resource allocation mode for the SL UE is configured as mode 1 by the serving base station, and the SL UE has an SL discovery message (for example, an NR Sidelink discovery message) to be sent.

Step 202: The UE receives the first configuration sent by the serving base station.

In this embodiment of this application, the first configuration includes at least one sidelink SL resource pool.

Optionally, in this embodiment of this application, the at least one sidelink SL resource pool is indicated by at least one of the following:

a first resource pool list; and
a second resource pool list.

For example, a first resource pool in the first resource pool list may be at least one SL communication resource pool or at least one shared resource pool, and a second resource pool in the second resource pool list is at least one SL discovery dedicated resource pool.

Step 203: The serving base station sends first DCI on a PDCCH to the UE.

Step 204: The UE obtains the first DCI by monitoring the PDCCH of the serving base station.

In this embodiment of this application, the first DCI is used to indicate an SL time-frequency resource scheduled by the serving base station.

In this embodiment of this application, the SL time-frequency resource comes from a target resource pool in the at least one SL resource pool. It may be understood that the target resource pool is one or more of the at least one SL resource pool configured in the first configuration.

Optionally, in this embodiment of this application, when the UE has an SL communication service and/or an SL discovery message to be sent, the target resource pool is used to send the SL discovery message.

Optionally, in this embodiment of this application, the target resource pool is used to send the SL discovery message.

Optionally, in this embodiment of this application, the first DCI includes at least one of the following:

a resource pool index; and
a time interval.

For example, the resource pool index is used to indicate the target resource pool, and the time interval is used to indicate time domain information of the SL time-frequency resource.

In the resource configuration method provided in this embodiment of this application, after the UE receives the first configuration (the first configuration includes the at least one sidelink SL resource pool) sent by the serving base station, the UE may obtain the first DCI by monitoring the PDCCH of the serving base station, to determine the SL time-frequency resource for the SL discovery message based on the first DCI, where the SL time-frequency resource is scheduled by the serving base station, and the SL time-frequency resource comes from the target resource pool in the at least one SL resource pool. By parsing the DCI sent by the serving base station, the UE determines, from the SL resource pool configured in the first configuration, the SL time-frequency resource for the SL discovery message. In this way, the SL discovery message can be transmitted based on the SL time-frequency resource, and further, service transmission with a high QoS (quality of service) requirement can be better supported.

Optionally, in this embodiment of this application, the resource configuration method provided in this embodiment of this application further includes the following step 301 and step 302.

Step 301: The serving base station determines the number of bits occupied by the resource pool index.

Step 302: The serving base station determines a value of the resource pool index.

In this embodiment of this application, before sending the first DCI to the UE, the serving base station needs to determine the number of bits occupied by the resource pool index carried in the first DCI and the value of the resource pool index.

Optionally, in this embodiment of this application, the resource configuration method provided in this embodiment of this application further includes the following step 303.

Step 303: The UE determines the number of bits occupied by the resource pool index.

In this embodiment of this application, after receiving the first DCI sent by the serving base station, the UE parses the first DCI, and determines, from the first DCI, the number of bits occupied by the resource pool index and the value of the resource pool index.

Optionally, in this embodiment of this application, the serving base station may determine, based on the first configuration including or not including the first resource pool list and/or the second resource pool list, the number of bits occupied by the resource pool index.

Optionally, in this embodiment of this application, the UE may determine, based on the first configuration including or not including the first resource pool list and/or the second resource pool list, the number of bits occupied by the resource pool index.

In a possible embodiment, the number of bits occupied by the resource pool index meets a first condition.

For example, in a case that the first configuration includes only the first resource pool list or includes only the second resource pool list, the number of bits occupied by the resource pool index is $\lceil \log_2 I1 \rceil$, where I1 is the number of resource pools in the first resource pool list or the number of resource pools in the second resource pool list.

In another possible embodiment, in a case that the first configuration includes the first resource pool list and the second resource pool list, the number of bits occupied by the resource pool index meets a first condition.

For example, in a case that the first configuration includes the first resource pool list and the second resource pool list, the number of bits occupied by the resource pool index meets any one of the following (in other words, it may be considered that the first condition includes any one of the following) that:

(1) the number of bits occupied by the resource pool index is $\lceil \log_2 I2 \rceil$, where I2 is the total number of resource pools in the first resource pool list and the second resource pool list;

(2) the number of bits occupied by the resource pool index is $\lceil \log_2 I3 \rceil$, where I3 is a larger one of the number of resource pools in the first resource pool list and the number of resource pools in the second resource pool list; and

(3) the number of bits occupied by the resource pool index is $\lceil \log_2 M \rceil + \lceil \log_2 N \rceil$, where M is the number of resource pools in the first resource pool list, and N is the number of resource pools in the second resource pool list.

In another possible embodiment, in the first configuration, in a case that the terminal does not distinguish between the first resource pool list and/or the second resource pool list, the number of bits occupied by the resource pool index is $\lceil \log_2 I \rceil$, where I is the number of the at least one SL resource pool or the maximum number of SL resource pools specified by a protocol.

Optionally, in this embodiment of this application, different first configurations correspond to different correspondences (that is, correspondences between values of resource pool indexes and the resource pool list configured in the first configuration).

First possible embodiment (in a case that the first configuration includes only the first resource pool list):

For example, in the case that the first configuration includes only the first resource pool list, the values of the resource pool indexes are in a one-to-one correspondence with a configuration order of the first resource pool list.

For example, assuming that the first resource pool list is a resource pool list corresponding to an sl-TxPoolScheduling configuration: {resource pool ID-1, resource pool ID-2, resource pool ID-3}, the resource pool index (Resource pool index) occupies two bits, resource pool index-0 corresponds to resource pool ID-1, resource pool index-1 corresponds to resource pool ID-2, and resource pool index-2 corresponds to resource pool ID-3.

Second possible embodiment (in a case that the first configuration includes only the second resource pool list):

For example, in the case that the first configuration includes only the second resource pool list, the values of the resource pool indexes are in a one-to-one correspondence with a configuration order of the second resource pool list.

For example, assuming that the second resource pool list is a resource pool list corresponding to an sl-DiscTxPoolScheduling configuration: {resource pool ID-1, resource pool ID-2, resource pool ID-3}, the resource pool index occupies two bits, resource pool index-0 corresponds to resource pool ID-1, resource pool index-1 corresponds to resource pool ID-2, and resource pool index-2 corresponds to resource pool ID-3.

Third possible embodiment (in a case that the first configuration includes the first resource pool list and the second resource pool list):

In a first possible implementation:

For example, the resource configuration method provided in this embodiment of this application further includes the following step 401a1.

Step 401a1: The UE determines a first correspondence between the value of the resource pool index and the first resource pool list and the second resource pool list based on any one of the following manners:

manner 1: first corresponding one-to-one with a configuration order of the first resource pool list, and then corresponding one-to-one with a configuration order of the second resource pool list;

manner 2: first corresponding one-to-one with the configuration order of the second resource pool list, and then corresponding one-to-one with the configuration order of the first resource pool list; and

manner 3: corresponding one-to-one with resource pool identification fields in the first resource pool list and the second resource pool list after reordering based on values of the resource pool identification fields.

For example, the resource configuration method provided in this embodiment of this application further includes the following step 401a2.

Step 401a2: The serving base station determines the first correspondence between the value of the resource pool index and the first resource pool list and the second resource pool list based on any one of the following manners:

manner 1: first corresponding one-to-one with the configuration order of the first resource pool list, and then corresponding one-to-one with the configuration order of the second resource pool list;

manner 2: first corresponding one-to-one with the configuration order of the second resource pool list, and then corresponding one-to-one with the configuration order of the first resource pool list; and

manner 3: corresponding one-to-one with the resource pool identification fields in the first resource pool list and the second resource pool list after reordering based on the values of the resource pool identification fields.

For example, in a case that the number of bits occupied by the resource pool index meets (1) and (3) in the first condition, the UE determines the first correspondence between the value of the resource pool index and the first resource pool list and the second resource pool list based on any one of the foregoing manners 1, 2, and 3.

For example, in the foregoing manners 1 and 2, the first resource pool list may be indexed first, followed by the second resource pool list; or the second resource pool list may be indexed first, followed by the first resource pool list.

For example, in the foregoing manner 3, after the first resource pool list and the second resource pool list are reintegrated, the resource pool identification fields in the resource pool lists are sorted again in ascending order.

As an example for the foregoing manner 1, the resource pool list corresponding to the sl-TxPoolScheduling configuration is: {resource pool ID-1, resource pool ID-2, resource pool ID-3}; and the resource pool list corresponding to the sl-DiscTxPoolScheduling configuration is: {resource pool ID-4, resource pool ID-5, resource pool ID-6}. Assuming that the resource pool list corresponding to the sl-TxPoolScheduling configuration is indexed first, followed by the resource pool list corresponding to the sl-DiscTxPoolScheduling configuration, and that the resource pool index occupies three bits (determined based on (1) in the first condition), resource pool index-0 corresponds to resource pool ID-1, resource pool index-1 corresponds to resource pool ID-2, resource pool index-2 corresponds to resource pool ID-3, resource pool index-3 corresponds to resource pool ID-4, resource pool index-4 corresponds to resource pool ID-5, and resource pool index-5 corresponds to resource pool ID-6.

As another example for the foregoing manner 1, the resource pool list corresponding to the sl-TxPoolScheduling configuration is: {resource pool ID-1, resource pool ID-2, resource pool ID-3}; and the resource pool list corresponding to the sl-DiscTxPoolScheduling configuration is: {resource pool ID-4, resource pool ID-5, resource pool ID-6}. Assuming that the resource pool list of sl-TxPoolScheduling is indexed first, followed by the resource pool list of sl-DiscTxPoolScheduling, and that the resource pool index occupies four bits (determined based on (3) in the first condition), resource pool index-0 corresponds to resource pool ID-1, resource pool index-1 corresponds to resource pool ID-2, resource pool index-2 corresponds to resource pool ID-3, resource pool index-3 currently does not correspond to any resource pool ID, resource pool index-4 corresponds to resource pool ID-4, resource pool index-5 corresponds to resource pool ID-5, resource pool index-6 corresponds to resource pool ID-6, and resource pool index-7 currently does not correspond to any resource pool ID.

As an example for the foregoing manner 2, the resource pool list corresponding to the sl-TxPoolScheduling configuration is: {resource pool ID-1, resource pool ID-2, resource pool ID-3}; and the resource pool list corresponding to the sl-DiscTxPoolScheduling configuration is: {resource pool ID-4, resource pool ID-5, resource pool ID-6}. Assuming that the resource pool list of sl-DiscTxPoolScheduling is indexed first, followed by the resource pool list of sl-TxPoolScheduling, and that the resource pool index occupies three bits (determined based on (1) in the first condition), resource pool index-0 corresponds to resource pool ID-4, resource pool index-1 corresponds to resource pool ID-5, resource pool index-2 corresponds to resource pool ID-6, resource pool index-3 corresponds to resource pool ID-1, resource pool index-4 corresponds to resource pool ID-2, and resource pool index-5 corresponds to resource pool ID-3.

As another example for the foregoing manner 2, the resource pool list corresponding to the sl-TxPoolScheduling configuration is: {resource pool ID-1, resource pool ID-2, resource pool ID-3}; and the resource pool list corresponding to the sl-DiscTxPoolScheduling configuration is: {resource pool ID-4, resource pool ID-5, resource pool ID-6}. Assuming that the resource pool list of sl-DiscTxPoolScheduling is indexed first, followed by the resource pool list of sl-TxPoolScheduling, and that the resource pool index occupies four bits (determined based on (3) in the first condition), resource pool index-0 corresponds to resource pool ID-4, resource pool index-1 corresponds to resource pool ID-5, resource pool index-2 corresponds to resource pool ID-6, resource pool index-3 currently does not correspond to any resource pool ID, resource pool index-4 corresponds to resource pool ID-1, resource pool index-5 corresponds to resource pool ID-2, resource pool index-6 corresponds to resource pool ID-3, and resource pool index-7 currently does not correspond to any resource pool ID.

As an example for the foregoing manner 3, the resource pool list corresponding to the sl-TxPoolScheduling configuration is: {resource pool ID-1, resource pool ID-3, resource pool ID-5}; and the resource pool list corresponding to the sl-DiscTxPoolScheduling configuration is: {resource pool ID-2, resource pool ID-4, resource pool ID-6}. Assuming that the resource pool list of sl-DiscTxPoolScheduling and the resource pool list of sl-TxPoolScheduling are indexed in ascending order after integration, and that the resource pool index occupies three bits (determined based on (1) in the first condition), resource pool index-0 corresponds to resource pool ID-1, resource pool index-1 corresponds to resource pool ID-2, resource pool index-2 corresponds to resource pool ID-3, resource pool index-3 corresponds to resource pool ID-4, resource pool index-4 corresponds to resource pool ID-5, and resource pool index-6 corresponds to resource pool ID-7.

As another example for the foregoing manner 3, the resource pool list corresponding to the sl-TxPoolScheduling configuration is: {resource pool ID-1, resource pool ID-3, resource pool ID-5}; and the resource pool list corresponding to the sl-DiscTxPoolScheduling configuration is: {resource pool ID-2, resource pool ID-4, resource pool ID-6}. Assuming that the resource pool list of sl-DiscTxPoolScheduling and the resource pool list of sl-TxPoolScheduling are indexed in ascending order after integration, and that the resource pool index occupies four bits (determined based on (3) in the first condition), resource pool index-0 corresponds to resource pool ID-1, resource pool index-1 corresponds to resource pool ID-2, resource pool index-2 corresponds to resource pool ID-3, resource pool index-3 currently does not correspond to any resource pool ID, resource pool index-4 corresponds to resource pool ID-4, resource pool index-5 corresponds to resource pool ID-5, resource pool index-6 corresponds to resource pool ID-7, and resource pool index-7 currently does not correspond to any resource pool ID.

In a second possible implementation:

For example, the resource configuration method provided in this embodiment of this application further includes the following step 401b1.

Step 401b1: The UE determines a second correspondence between the value of the resource pool index and the first resource pool list and the second resource pool list based on at least one of the following that:

manner 4: the value of the resource pool index corresponds to a resource pool closest to the time interval in time domain, in the first resource pool list and the second resource pool list; and

manner 5: the value of the resource pool index corresponds to a resource pool closest to or farthest away from a start RB number in frequency domain, in the first resource pool list and the second resource pool list.

For example, the resource configuration method provided in this embodiment of this application further includes the following step 401b2.

Step 401b2: The serving base station determines the second correspondence between the value of the resource pool index and the first resource pool list and the second resource pool list based on at least one of the following:

manner 4: the value of the resource pool index corresponds to the resource pool closest to the time interval in time domain, in the first resource pool list and the second resource pool list; and

manner 5: the value of the resource pool index corresponds to the resource pool closest to or farthest away from the start RB number in frequency domain, in the first resource pool list and the second resource pool list.

For example, in a case that the number of bits occupied by the resource pool index meets (2) in the first condition, the UE determines the first correspondence between the value of the resource pool index and the first resource pool list and the second resource pool list based on at least one of the foregoing manners 4 and 5.

For example, the resource pool closest to the time interval may be a resource pool indicated by the first DCI and determined based on the time interval indicated by the first DCI. This approach is mainly intended to determine whether two resource pools with the same resource pool index value or with conflicting resource pool index values come from the first resource pool list or the second resource pool list. Further, if the two resource pools overlap in time domain, the UE cannot distinguish between the two resource pools. A further approach is to distinguish based on the frequency domain. In other words, from two resource pools in the same time domain (FDM), one is selected based on ordering in frequency domain. For example, a resource pool with the smallest sl-StartRB-Subchannel is selected.

In this way, in a case that the first configuration sent by the serving base station includes the first resource pool list and the second resource pool list, the correspondence between the value of the resource pool index and the first and second resource pool lists may be determined based on the number of bits occupied by the resource pool index in the first resource pool list and the second resource pool list in the first configuration, and based on the first and second resource pool lists and the value of the resource pool index, so that the SL time-frequency resource used for sending the SL discovery message can be determined based on the number of bits occupied by the resource pool index and the value of the resource pool index.

Fourth possible embodiment (without distinguishing between the first resource pool list and the second resource pool list in the first configuration):

For example, the resource configuration method provided in this embodiment of this application further includes the following step 401c1.

Step 401c1: The UE determines that a third correspondence between the value of the resource pool index and the at least one SL resource pool includes either of the following:

relationship 1: a one-to-one correspondence between the value of the resource pool index and a value of a resource pool identification field of the at least one SL resource pool; and
relationship 2: a one-to-one correspondence between the value of the resource pool index and a candidate value 1, 2, ..., 15, or 16 of the resource pool identification field.

For example, the resource configuration method provided in this embodiment of this application further includes the following step 401c2.

Step 401c2: The serving base station determines that the third correspondence between the value of the resource pool index and the at least one SL resource pool includes either of the following:

relationship 1: the one-to-one correspondence between the value of the resource pool index and the value of the resource pool identification field of the at least one SL resource pool; and
relationship 2: the one-to-one correspondence between the value of the resource pool index and the value 1, 2, ..., 15, or 16 of the resource pool identification field.

For example, assuming that the serving base station configures at least one resource pool {resource pool ID-1, resource pool ID-2, resource pool ID-3}, the configuration is interpreted as follows: Resource pool index-0 corresponds to resource pool ID-1, resource pool index-1 corresponds to resource pool ID-2, and resource pool index-2 corresponds to resource pool ID-3.

For example, in a case that which type of resource pool list is not distinguished, it is always interpreted as follows: Resource pool index-0 corresponds to resource pool ID-1, resource pool index-1 corresponds to resource pool ID-2, resource pool index-2 corresponds to resource pool ID-3, resource pool index-3 corresponds to resource pool ID-4, resource pool index-4 corresponds to resource pool ID-5, resource pool index-6 corresponds to resource pool ID-7, ..., resource pool index-15 corresponds to resource pool ID-16.

In this way, in the first configuration sent by the serving base station, the terminal can directly determine, based on the number of bits occupied by the resource pool index in the first DCI and the value of the resource pool index, the SL time-frequency resource used for sending the SL discovery message, without distinguishing between the first resource pool list and the second resource pool list.

The resource configuration method provided in this embodiment of this application may be performed by a resource configuration apparatus. A resource configuration apparatus provided in an embodiment of this application is described by assuming that the resource configuration method is performed by the resource configuration apparatus in this embodiment of this application.

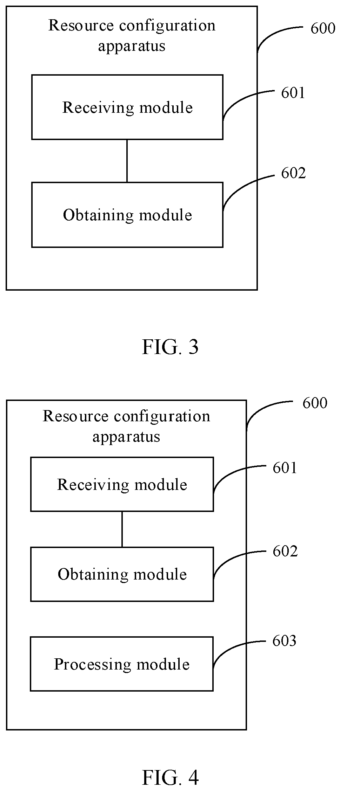

An embodiment of this application provides a resource configuration apparatus 600. As shown in FIG. 3, the resource configuration apparatus 600 includes a receiving module 601 and an obtaining module 602. The receiving module 601 is configured to receive a first configuration sent by a serving base station, where the first configuration includes at least one sidelink SL resource pool. The obtaining module 602 is configured to obtain first downlink control information DCI by monitoring a physical downlink control channel PDCCH of the serving base station, where the first DCI is used to indicate an SL time-frequency resource scheduled by the serving base station, and the SL time-frequency resource comes from a target resource pool in the at least one SL resource pool.

Optionally, in this embodiment of this application, the at least one sidelink SL resource pool is indicated by at least one of the following: a first resource pool list; and a second resource pool list, where a first resource pool in the first resource pool list is at least one SL communication resource pool or at least one shared resource pool, and a second resource pool in the second resource pool list is at least one SL discovery dedicated resource pool.

Optionally, in this embodiment of this application, UE has an SL communication service and/or an SL discovery message to be sent, and the target resource pool is used to send the SL discovery message.

Optionally, in this embodiment of this application, the first DCI includes at least one of the following: a resource pool index, where the resource pool index is used to indicate the target resource pool; and a time interval, where the time interval is used to indicate time domain information of the SL time-frequency resource.

Optionally, in this embodiment of this application, with reference to FIG. 3, as shown in FIG. 4, the apparatus 600 further includes a processing module 603, where the processing module 603 is configured to determine, based on the first configuration including or not including a first resource pool list and/or a second resource pool list, the number of bits occupied by the resource pool index.

Optionally, in this embodiment of this application, in a case that the first configuration includes only the first resource pool list or includes only the second resource pool list, the number of bits occupied by the resource pool index is

$$\lceil \log_2 I1 \rceil$$

, where I1 is the number of resource pools in the first resource pool list or the number of resource pools in the second resource pool list.

Optionally, in this embodiment of this application, in a case that the first configuration includes the first resource pool list and the second resource pool list, the number of bits occupied by the resource pool index meets any one of the following that: the number of bits occupied by the resource pool index is $\lceil \log_2 I2 \rceil$, where I2 is the total number of resource pools in the first resource pool list and the second resource pool list; the number of bits occupied by the resource pool index is $\lceil \log_2 I3 \rceil$, where I3 is a larger one of the number of resource pools in the first resource pool list and the number of resource pools in the second resource pool list; and the number of bits occupied by the resource pool index is $\lceil \log_2 M \rceil + \lceil \log_2 N \rceil$, where M is the number of resource pools in the first resource pool list, and N is the number of resource pools in the second resource pool list.

Optionally, in this embodiment of this application, the processing module 603 is further configured to determine a first correspondence between a value of the resource pool index and the first resource pool list and the second resource pool list based on any one of the following: first corresponding one-to-one with a configuration order of the first resource pool list, and then corresponding one-to-one with a configuration order of the second resource pool list; first corresponding one-to-one with the configuration order of the second resource pool list, and then corresponding one-to-one with the configuration order of the first resource pool list; and corresponding one-to-one with resource pool identification fields in the first resource pool list and the second resource pool list after reordering based on values of the resource pool identification fields.

Optionally, in this embodiment of this application, the processing module 603 is further configured to determine a second correspondence between a value of the resource pool index and the first resource pool list and the second resource pool list based on at least one of the following that: the value of the resource pool index corresponds to a resource pool closest to the time interval in time domain, in the first resource pool list and the second resource pool list; and the value of the resource pool index corresponds to a resource pool closest to or farthest away from a start RB number in frequency domain, in the first resource pool list and the second resource pool list.

Optionally, in this embodiment of this application, the number of bits occupied by the resource pool index is $\lceil \log_2 I \rceil$, where I is the number of the at least one SL resource pool or the maximum number of SL resource pools specified by a protocol.

Optionally, in this embodiment of this application, after determining the number of bits occupied by the resource pool index, the processing module 603 is further configured to determine that a third correspondence between a value of the resource pool index and the at least one SL resource pool includes either of the following: a one-to-one correspondence between the value of the resource pool index and a value of a resource pool identification field of the at least one SL resource pool; and a one-to-one correspondence between the value of the resource pool index and a value 1, 2, ..., 15, or 16 of the resource pool identification field.

According to the resource configuration apparatus provided in this embodiment of this application, after the apparatus receives the first configuration (the first configuration includes the at least one sidelink SL resource pool) sent by the serving base station, the apparatus may obtain the first DCI by monitoring the PDCCH of the serving base station, to determine, based on the first DCI, the SL time-frequency resource scheduled by the serving base station, where the SL time-frequency resource comes from the target resource pool in the at least one SL resource pool. By parsing the DCI sent by the serving base station, the UE determines, from the SL resource pool configured in the first configuration, the SL time-frequency resource for the SL discovery message. In this way, the SL discovery message can be transmitted based on the SL time-frequency resource, and further, service transmission with a high QoS (quality of service) requirement can be better supported.

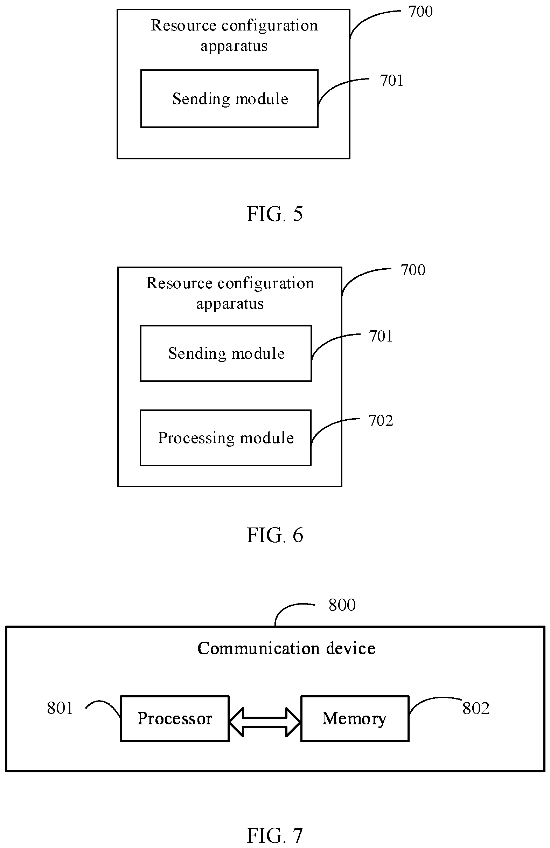

An embodiment of this application provides a resource configuration apparatus 700. As shown in FIG. 5, the resource configuration apparatus 700 includes a sending module 701. The sending module 701 is configured to send a first configuration to UE, where the first configuration includes at least one sidelink SL resource pool. The sending module is configured to send first DCI on a PDCCH to the UE, where the first DCI is used to indicate an SL time-frequency resource scheduled by a serving base station, and the SL time-frequency resource comes from a target resource pool in the at least one SL resource pool.

Optionally, in this embodiment of this application, the at least one sidelink SL resource pool is indicated by at least one of the following: a first resource pool list; and a second resource pool list, where a first resource pool in the first resource pool list is at least one SL communication resource pool or at least one shared resource pool, and a second resource pool in the second resource pool list is at least one SL discovery dedicated resource pool.

Optionally, in this embodiment of this application, the UE has an SL communication service and/or an SL discovery message to be sent, and the target resource pool is used to send the SL discovery message.

Optionally, in this embodiment of this application, the first DCI includes at least one of the following: a resource pool index, where the resource pool index is used to indicate the target resource pool; and a time interval, where the time interval is used to indicate time domain information of the SL time-frequency resource.

Optionally, in this embodiment of this application, with reference to FIG. 5, as shown in FIG. 6, the apparatus 700 further includes a processing module 702, where the processing module 702 is configured to determine, based on the first configuration including or not including a first resource pool list and/or a second resource pool list, the number of bits occupied by the resource pool index.

Optionally, in this embodiment of this application, in a case that the first configuration includes only the first resource pool list or includes only the second resource pool list, the number of bits occupied by the resource pool index is $\lceil \log_2 I1 \rceil$, where I1 is the number of resource pools in the first resource pool list or the number of resource pools in the second resource pool list.

Optionally, in this embodiment of this application, in a case that the first configuration includes the first resource pool list and the second resource pool list, the number of bits occupied by the resource pool index meets any one of the following that: the number of bits occupied by the resource pool index is $\lceil \log_2 I2 \rceil$, where I2 is the total number of resource pools in the first resource pool list and the second resource pool list; the number of bits occupied by the resource pool index is $\lceil \log_2 I3 \rceil$, where I3 is a larger one of the number of resource pools in the first resource pool list and the number of resource pools in the second resource pool list; and the number of bits occupied by the resource pool index is $\lceil \log_2 M \rceil + \lceil \log_2 N \rceil$, where M is the number of resource pools in the first resource pool list, and N is the number of resource pools in the second resource pool list.

Optionally, in this embodiment of this application, the processing module 702 is further configured to determine a value of the resource pool index.

Optionally, in this embodiment of this application, the processing module 702 is further configured to determine a first correspondence between the value of the resource pool index and the first resource pool list and the second resource pool list based on any one of the following: first corresponding one-to-one with a configuration order of the first resource pool list, and then corresponding one-to-one with a configuration order of the second resource pool list; first corresponding one-to-one with the configuration order of the second resource pool list, and then corresponding one-to-one with the configuration order of the first resource pool list; and corresponding one-to-one with resource pool identification fields in the first resource pool list and the second resource pool list after reordering based on values of the resource pool identification fields.

Optionally, in this embodiment of this application, the processing module 702 is further configured to determine a second correspondence between the value of the resource pool index and the first resource pool list and the second resource pool list based on at least one of the following that: the value of the resource pool index corresponds to a resource pool closest to the time interval in time domain, in the first resource pool list and the second resource pool list; and the value of the resource pool index corresponds to a resource pool closest to or farthest away from a start RB number in frequency domain, in the first resource pool list and the second resource pool list.

Optionally, in this embodiment of this application, the number of bits occupied by the resource pool index is $\lceil \log_2 I \rceil$, where I is the number of the at least one SL resource pool or the maximum number of SL resource pools specified by a protocol.

Optionally, in this embodiment of this application, the processing module 702 is further configured to determine a value of the resource pool index, where a third correspondence between the value of the resource pool index and the at least one SL resource pool includes either of the following: a one-to-one correspondence between the value of the resource pool index and a value of a resource pool identification field of the at least one SL resource pool; and a one-to-one correspondence between the value of the resource pool index and a value 1, 2, ..., 15, or 16 of the resource pool identification field.

According to the resource configuration apparatus provided in this embodiment of this application, the apparatus sends the first configuration (the first configuration includes the at least one sidelink SL resource pool) to the UE, so that the UE may obtain the first DCI by monitoring the PDCCH of the serving base station, to determine, based on the first DCI, from the SL resource pool configured in the first configuration, the SL time-frequency resource scheduled by the serving base station, where the SL time-frequency resource comes from the target resource pool in the at least one SL resource pool. By parsing the DCI sent by the serving base station, the UE determines, from the SL resource pool configured in the first configuration, the SL time-frequency resource for the SL discovery message. In this way, the SL discovery message can be transmitted based on the SL time-frequency resource, and further, service transmission with a high QoS requirement can be better supported.

The resource configuration apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The resource configuration apparatus provided in this embodiment of this application can implement each process implemented in the method embodiments in FIG. 3 to FIG. 6, with the same technical effect achieved. To avoid repetition, details are not described herein again.

Optionally, as shown in FIG. 7, an embodiment of this application further provides a communication device 800, including a processor 801 and a memory 802. The memory 802 stores a program or instructions executable on the processor 801. For example, when the communication device 800 is a terminal, and the program or instructions are executed by the processor 801, the steps of the foregoing embodiment of the resource configuration method are implemented, with the same technical effect achieved. When the communication device 800 is a network-side device, and the program or instructions are executed by the processor 801, the steps of the foregoing embodiment of the resource configuration method are implemented, with the same technical effect achieved. To avoid repetition, details are not described herein again.

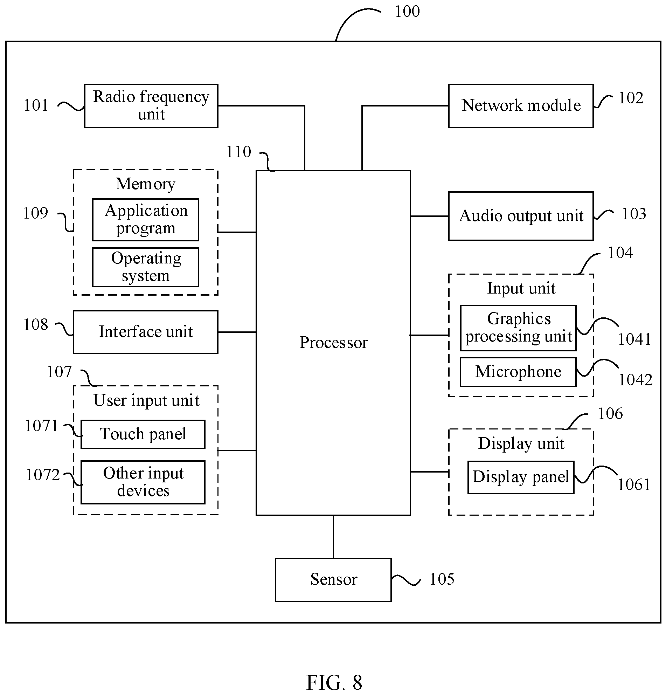

An embodiment of this application further provides a terminal, including a processor and a communication interface. The communication interface is configured to: receive a first configuration sent by a serving base station, where the first configuration includes at least one sidelink SL resource pool; and obtain first downlink control information DCI by monitoring a physical downlink control channel PDCCH of the serving base station, where the first DCI is used to indicate an SL time-frequency resource for an SL discovery message, the SL time-frequency resource is scheduled by the serving base station, and the SL time-frequency resource comes from a target resource pool in the at least one SL resource pool. The terminal embodiment corresponds to the foregoing terminal-side method embodiment, and each implementation process and implementation of the foregoing method embodiment can be applied to the terminal embodiment, with the same technical effect achieved. Specifically, FIG. 8 is a schematic diagram of a hardware structure of a terminal for implementing an embodiment of this application.

The terminal 100 includes but is not limited to at least some components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the terminal 100 may further include a power supply (for example, a battery) supplying power to all components. Optionally, the power supply may be logically connected to the processor 110 through a power management system. In this way, functions such as charge management, discharge management, and power consumption management are implemented by using the power management system. The terminal structure shown in FIG. 8 does not constitute a limitation on the terminal. The terminal may include more or fewer components than those shown in the figure, or some components are combined, or component arrangements are different. Details are not described herein again.

It should be understood that, in this embodiment of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 101 may transmit the downlink data to the processor 110 for processing. In addition, the radio frequency unit 101 may send uplink data to the network-side device. Usually, the radio frequency unit 101 includes but is not limited to an antenna, an amplifier, a transceiver, a coupler, a low noise amplifier, a duplexer, and the like.

The memory 109 may be configured to store software programs or instructions and various data. The memory 109 may primarily include a first storage area for storing programs or instructions and a second storage area for storing data. The first storage area may store an operating system, an application program or instructions required by at least one function (such as an audio play function and an image play function), and the like. In addition, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 109 in this embodiment of this application includes but is not limited to these and any other suitable types of memories.

The processor 110 may include one or more processing units. Optionally, the processor 110 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 110.

The radio frequency unit 101 is configured to receive a first configuration sent by a serving base station, where the first configuration includes at least one sidelink SL resource pool. The processor 110 is configured to obtain first downlink control information DCI by monitoring a physical downlink control channel PDCCH of the serving base station, where the first DCI is used to indicate an SL time-frequency resource scheduled by the serving base station, and the SL time-frequency resource comes from a target resource pool in the at least one SL resource pool.

Optionally, in this embodiment of this application, the at least one sidelink SL resource pool is indicated by at least one of the following: a first resource pool list; and a second resource pool list, where a first resource pool in the first resource pool list is at least one SL communication resource pool or at least one shared resource pool, and a second resource pool in the second resource pool list is at least one SL discovery dedicated resource pool.

Optionally, in this embodiment of this application, UE has an SL communication service and/or an SL discovery message to be sent, and the target resource pool is used to send the SL discovery message.

Optionally, in this embodiment of this application, the first DCI includes at least one of the following: a resource pool index, where the resource pool index is used to indicate the target resource pool; and a time interval, where the time interval is used to indicate time domain information of the SL time-frequency resource.

Optionally, in this embodiment of this application, the processor 110 is further configured to determine, based on the first configuration including or not including a first resource pool list and/or a second resource pool list, the number of bits occupied by the resource pool index.

Optionally, in this embodiment of this application, in a case that the first configuration includes only the first resource pool list or includes only the second resource pool list, the number of bits occupied by the resource pool index is $\lceil \log_2 I1 \rceil$, where I1 is the number of resource pools in the first resource pool list or the number of resource pools in the second resource pool list.

Optionally, in this embodiment of this application, in a case that the first configuration includes the first resource pool list and the second resource pool list, the number of bits occupied by the resource pool index meets any one of the following that: the number of bits occupied by the resource pool index is $\lceil \log_2 I2 \rceil$, where I2 is the total number of resource pools in the first resource pool list and the second resource pool list; the number of bits occupied by the resource pool index is $\lceil \log_2 I3 \rceil$, where I3 is a larger one of the number of resource pools in the first resource pool list and the number of resource pools in the second resource pool list; and the number of bits occupied by the resource pool index is $\lceil \log_2 M \rceil + \lceil \log_2 N \rceil$, where M is the number of resource pools in the first resource pool list, and N is the number of resource pools in the second resource pool list.

Optionally, in this embodiment of this application, after determining the number of bits occupied by the resource pool index, the processor 110 is further configured to determine a first correspondence between a value of the resource pool index and the first resource pool list and the second resource pool list based on any one of the following: first corresponding one-to-one with a configuration order of the first resource pool list, and then corresponding one-to-one with a configuration order of the second resource pool list; first corresponding one-to-one with the configuration order of the second resource pool list, and then corresponding one-to-one with the configuration order of the first resource pool list; and corresponding one-to-one with resource pool identification fields in the first resource pool list and the second resource pool list after reordering based on values of the resource pool identification fields.

Optionally, in this embodiment of this application, after determining the number of bits occupied by the resource pool index, the processor 110 is further configured to determine a second correspondence between a value of the resource pool index and the first resource pool list and the second resource pool list based on at least one of the following that: the value of the resource pool index corresponds to a resource pool closest to the time interval in time domain, in the first resource pool list and the second resource pool list; and the value of the resource pool index corresponds to a resource pool closest to or farthest away from a start RB number in frequency domain, in the first resource pool list and the second resource pool list.

Optionally, in this embodiment of this application, the number of bits occupied by the resource pool index is $\lceil \log_2 I \rceil$, where I is the number of the at least one SL resource pool or the maximum number of SL resource pools specified by a protocol.

Optionally, in this embodiment of this application, after determining the number of bits occupied by the resource pool index, the processor 110 is further configured to determine that a third correspondence between a value of the resource pool index and the at least one SL resource pool includes either of the following: a one-to-one correspondence between the value of the resource pool index and a value of a resource pool identification field of the at least one SL resource pool; and a one-to-one correspondence between the value of the resource pool index and a value 1, 2, ..., 15, or 16 of the resource pool identification field.

According to the electronic device provided in this embodiment of this application, after the electronic device receives the first configuration (the first configuration includes the at least one sidelink SL resource pool) sent by the serving base station, the electronic device may obtain the first DCI by monitoring the PDCCH of the serving base station, to determine, based on the first DCI, the SL time-frequency resource scheduled by the serving base station, where the SL time-frequency resource comes from the target resource pool in the at least one SL resource pool. By parsing the DCI sent by the serving base station, the UE determines, from the SL resource pool configured in the first configuration, the SL time-frequency resource for the SL discovery message. In this way, the SL discovery message can be transmitted based on the SL time-frequency resource, and further, service transmission with a high QoS (quality of service) requirement can be better supported.

An embodiment of this application further provides a serving base station, including a processor and a communication interface. The communication interface is configured to: send a first configuration, where the first configuration includes at least one SL resource pool; and send first downlink control information DCI on a PDCCH, where the first DCI is used to indicate an SL time-frequency resource scheduled by the serving base station, and the SL time-frequency resource comes from a target resource pool in the at least one SL resource pool. The serving base station embodiment corresponds to the foregoing method embodiment of the serving base station, and each implementation process and implementation of the foregoing method embodiment can be applied to the network-side device embodiment, with the same technical effect achieved.

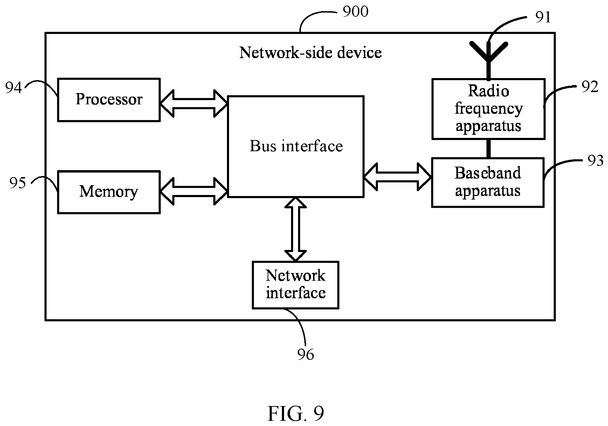

Specifically, an embodiment of this application further provides a serving base station. As shown in FIG. 9, the network-side device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes to-be-sent information, and sends the information to the radio frequency apparatus 92; and the radio frequency apparatus 92 processes the received information and then sends the information out by using the antenna 91.

The method performed by the network-side device in the foregoing embodiment may be implemented in the baseband apparatus 93. The baseband apparatus 93 includes a baseband processor.

The baseband apparatus 93 may include, for example, at least one baseband unit, where a plurality of chips are disposed on the baseband unit. As shown in FIG. 9, one of the chips is, for example, the baseband processor, connected to the memory 95 by using a bus interface, to invoke a program in the memory 95 to perform the operation of the network device shown in the foregoing method embodiment.

The network-side device may further include a network interface 96, where the interface is, for example, a common public radio interface (common public radio interface, CPRI).

Specifically, the network-side device 900 in this embodiment of the present invention further includes a program or instructions stored in the memory 95 and executable on the processor 94. When the processor 94 invokes the program or instructions in the memory 95, the method performed by each module shown in FIG. 3 to FIG. 6 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the resource configuration method is implemented, with the same technical effect achieved. To avoid repetition, details are not described herein again.

The processor is a processor in the terminal in the foregoing embodiment. The readable storage medium may be non-volatile or non-transitory. The readable storage medium may include a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the resource configuration method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the resource configuration method, with the same technical effect achieved. To avoid repetition, details are not described herein again.

An embodiment of this application further provides a communication system, including a terminal and a network-side device. The terminal may be configured to perform the steps of the foregoing resource configuration method. The serving base station may be configured to perform the steps of the foregoing resource configuration method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

**Claims**

1. A resource configuration method, comprising:

   receiving, by a user equipment UE, a first configuration sent by a serving base station, wherein the first configuration comprises at least one sidelink SL resource pool; and
   obtaining, by the UE, first downlink control information DCI by monitoring a physical downlink control channel PDCCH of the serving base station, wherein
   the first DCI is used to indicate an SL time-frequency resource scheduled by the serving base station, and the SL time-frequency resource comes from a target resource pool in the at least one SL resource pool.

2. The method according to claim 1, wherein the at least one SL resource pool is indicated by at least one of the following:

   a first resource pool list; and
   a second resource pool list, wherein
   a first resource pool in the first resource pool list is at least one SL communication resource pool or at least one shared resource pool, and a second resource pool in the second resource pool list is at least one SL discovery dedicated resource pool.

3. The method according to claim 1 or 2, wherein the UE has an SL communication service and/or an SL discovery message to be sent, and the target resource pool is used to send the SL discovery message.

4. The method according to claim 1, wherein the first DCI comprises at least one of the following:

a resource pool index, wherein the resource pool index is used to indicate the target resource pool; and
a time interval, wherein the time interval is used to indicate time domain information of the SL time-frequency resource.

5. The method according to claim 4, wherein the method further comprises:
determining, based on the first configuration comprising or not comprising a first resource pool list and/or a second resource pool list, the number of bits occupied by the resource pool index.

6. The method according to claim 5, wherein in a case that the first configuration comprises only the first resource pool list or comprises only the second resource pool list, the number of bits occupied by the resource pool index is $\lceil \log_2 I1 \rceil$, wherein
I1 is the number of resource pools in the first resource pool list or the number of resource pools in the second resource pool list.

7. The method according to claim 5, wherein in a case that the first configuration comprises the first resource pool list and the second resource pool list, the number of bits occupied by the resource pool index meets any one of the following that:

the number of bits occupied by the resource pool index is $\lceil \log_2 I2 \rceil$, wherein I2 is the total number of resource pools in the first resource pool list and the second resource pool list;

the number of bits occupied by the resource pool index is $\lceil \log_2 I3 \rceil$, wherein I3 is a larger one of the number of resource pools in the first resource pool list and the number of resource pools in the second resource pool list; and

the number of bits occupied by the resource pool index is $\lceil \log_2 M \rceil + \lceil \log_2 N \rceil$, wherein M is the number of resource pools in the first resource pool list, and N is the number of resource pools in the second resource pool list.

8. The method according to claim 7, wherein after determining the number of bits occupied by the resource pool index, the method further comprises:
determining a first correspondence between a value of the resource pool index and the first resource pool list and the second resource pool list based on any one of the following:

first corresponding one-to-one with a configuration order of the first resource pool list, and then corresponding one-to-one with a configuration order of the second resource pool list;
first corresponding one-to-one with the configuration order of the second resource pool list, and then corresponding one-to-one with the configuration order of the first resource pool list; and
corresponding one-to-one with resource pool identification fields in the first resource pool list and the second resource pool list after reordering based on values of the resource pool identification fields.

9. The method according to claim 7, wherein after determining the number of bits occupied by the resource pool index, the method further comprises:
determining a second correspondence between a value of the resource pool index and the first resource pool list and the second resource pool list based on at least one of the following that:

the value of the resource pool index corresponds to a resource pool closest to time interval in time domain, in the first resource pool list and the second resource pool list; and
the value of the resource pool index corresponds to a resource pool closest to or farthest away from a start RB number in frequency domain, in the first resource pool list and the second resource pool list.

10. The method according to claim 4, wherein the number of bits occupied by the resource pool index is $\lceil \log_2 I \rceil$, wherein

I is the number of the at least one SL resource pool or the maximum number of SL resource pools specified by a protocol.

11. The method according to claim 10, wherein after the number of bits occupied by the resource pool index is determined, the method further comprises:
determining that a third correspondence between a value of the resource pool index and the at least one SL resource pool comprises either of the following:

a one-to-one correspondence between the value of the resource pool index and a value of a resource pool identification field of the at least one SL resource pool; and
a one-to-one correspondence between the value of the resource pool index and a value 1, 2, ..., 15, or 16 of the resource pool identification field.

12. A resource configuration method, comprising:

sending, by a serving base station, a first configuration to a user equipment UE, wherein the first configuration comprises at least one sidelink SL resource pool; and
sending, by the serving base station, first downlink control information DCI on a physical downlink control channel PDCCH to the UE, wherein
the first DCI is used to indicate an SL time-frequency resource scheduled by the serving base station, and the SL time-frequency resource comes from a target resource pool in the at least one SL resource pool.

13. The method according to claim 12, wherein the at least one SL resource pool is indicated by at least one of the following:

a first resource pool list; and
a second resource pool list, wherein
a first resource pool in the first resource pool list is at least one SL communication resource pool or at least one shared resource pool, and a second resource pool in the second resource pool list is at least one SL discovery dedicated resource pool.

14. The method according to claim 12 or 13, wherein the UE has an SL communication service and/or an SL discovery message to be sent, and the target resource pool is used to send the SL discovery message.

15. The method according to claim 12, wherein the first DCI comprises at least one of the following:

a resource pool index, wherein the resource pool index is used to indicate the target resource pool; and
a time interval, wherein the time interval is used to indicate time domain information of the SL time-frequency resource.

16. The method according to claim 15, wherein the method further comprises:
determining, based on the first configuration comprising or not comprising a first resource pool list and/or a second resource pool list, the number of bits occupied by the resource pool index.

17. The method according to claim 16, wherein in a case that the first configuration comprises only the first resource pool list or comprises only the second resource pool list, the number of bits occupied by the resource pool index is $\lceil \log_2 I1 \rceil$, wherein
I1 is the number of resource pools in the first resource pool list or the number of resource pools in the second resource pool list.

18. The method according to claim 16, wherein in a case that the first configuration comprises the first resource pool list and the second resource pool list, the number of bits occupied by the resource pool index meets any one of the following that:

the number of bits occupied by the resource pool index is $\lceil \log_2 I2 \rceil$, wherein I2 is the total number of resource pools in the first resource pool list and the second resource pool list;

the number of bits occupied by the resource pool index is $\lceil \log_2 I3 \rceil$, wherein I3 is a larger one of the number of resource pools in the first resource pool list and the number of resource pools in the second resource pool list; and

the number of bits occupied by the resource pool index is $\lceil \log_2 M \rceil + \lceil \log_2 N \rceil$, wherein M is the number of resource pools in the first resource pool list, and N is the number of resource pools in the second resource pool list.

**19.** The method according to claim 18, wherein the method further comprises:
determining, by the serving base station, a value of the resource pool index.

**20.** The method according to claim 19, wherein the method further comprises:
determining, by the serving base station, a first correspondence between the value of the resource pool index and the first resource pool list and the second resource pool list based on any one of the following:

first corresponding one-to-one with a configuration order of the first resource pool list, and then corresponding one-to-one with a configuration order of the second resource pool list;
first corresponding one-to-one with the configuration order of the second resource pool list, and then corresponding one-to-one with the configuration order of the first resource pool list; and
corresponding one-to-one with resource pool identification fields in the first resource pool list and the second resource pool list after reordering based on values of the resource pool identification fields.

**21.** The method according to claim 19, wherein the method further comprises:
determining, by the serving base station, a second correspondence between the value of the resource pool index and the first resource pool list and the second resource pool list based on at least one of the following that:

the value of the resource pool index corresponds to a resource pool closest to time interval in time domain, in the first resource pool list and the second resource pool list; and
the value of the resource pool index corresponds to a resource pool closest to or farthest away from a start RB number in frequency domain, in the first resource pool list and the second resource pool list.

**22.** The method according to claim 15, wherein the number of bits occupied by the resource pool index is $\lceil \log_2 I \rceil$, wherein
I is the number of the at least one SL resource pool or the maximum number of SL resource pools specified by a protocol.

**23.** The method according to claim 22, wherein after the number of bits occupied by the resource pool index is determined, the method further comprises:

determining, by the serving base station, a value of the resource pool index, wherein
a third correspondence between the value of the resource pool index and the at least one SL resource pool comprises either of the following:

a one-to-one correspondence between the value of the resource pool index and a value of a resource pool identification field of the at least one SL resource pool; and
a one-to-one correspondence between the value of the resource pool index and a value 1, 2, ..., 15, or 16 of the resource pool identification field.

**24.** A resource configuration apparatus, comprising a receiving module and an obtaining module, wherein

the receiving module is configured to receive a first configuration sent by a serving base station, wherein the first configuration comprises at least one sidelink SL resource pool; and
the obtaining module is configured to obtain first downlink control information DCI by monitoring a physical downlink control channel PDCCH of the serving base station, wherein
the first DCI is used to indicate an SL time-frequency resource scheduled by the serving base station, and the SL time-frequency resource comes from a target resource pool in the at least one SL resource pool.

25. A resource configuration apparatus, comprising a sending module, wherein

the sending module is configured to send a first configuration to a UE, wherein the first configuration comprises at least one sidelink SL resource pool; and
the sending module is configured to send first downlink control information DCI on a physical downlink control channel PDCCH to the UE, wherein
the first DCI is used to indicate an SL time-frequency resource scheduled by a serving base station, and the SL time-frequency resource comes from a target resource pool in the at least one SL resource pool.

26. A terminal, comprising a processor and a memory, wherein the memory stores a program or instructions executable on the processor, and when the program or instructions are executed by the processor, the steps of the resource configuration method according to any one of claims 1 to 11 are implemented.

27. A serving base station, comprising a processor and a memory, wherein the memory stores a program or instructions executable on the processor, and when the program or instructions are executed by the processor, the steps of the resource configuration method according to any one of claims 12 to 23 are implemented.

28. A readable storage medium, wherein the readable storage medium stores a program or instructions, and when the program or instructions are executed by a processor, the steps of the resource configuration method according to any one of claims 1 to 11 are implemented, or the steps of the resource configuration method according to any one of claims 12 to 23 are implemented.

29. A chip, wherein the chip comprises a processor and a communication interface, the communication interface is coupled to the processor, and the processor is configured to run a program or instructions to implement the steps of the resource configuration method according to any one of claims 1 to 11, or implement the steps of the resource configuration method according to any one of claims 12 to 23.

12

Network-side
device

11

11

Terminal

Terminal

FIG. 1

| UE | | Serving base station |
| --- | --- | --- |

←—201. Send a first configuration to the UE—

202. The UE receives the first configuration
sent by the serving base station

←203. Send first DCI on a PDCCH to the UE—

204. The UE obtains the first DCI by monitoring
the PDCCH of the serving base station

FIG. 2

Resource configuration
apparatus

Receiving module — 601

Obtaining module — 602

— 600

FIG. 3

Resource configuration
apparatus

Receiving module — 601

Obtaining module — 602

Processing module — 603

— 600

FIG. 4

Resource configuration
apparatus — 700

Sending module — 701

FIG. 5

Resource configuration
apparatus — 700

Sending module — 701

Processing module — 702

FIG. 6

— 800

Communication device

801 — Processor ⟷ Memory — 802

FIG. 7

FIG. 8

900

91

Network-side device

94 — Processor

95 — Memory

Bus interface

Radio frequency apparatus — 92

Baseband apparatus — 93

Network interface

96

FIG. 9

## INTERNATIONAL SEARCH REPORT

| | International application No. |
| --- | --- |
| | **PCT/CN2023/111729** |

### A. CLASSIFICATION OF SUBJECT MATTER

H04W 72/04(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNKI; CNTXT; VEN; USTXT; WOTXT; EPTXT; 3GPP; IEEE; IETF: 侧链, 旁链, 调度, 配置, 资源, 池, 下行控制信息, 索引, sidelink, SL, schedule, configure, resource, pool, DCI, index

### C. DOCUMENTS CONSIDERED TO BE RELEVANT

| Category* | Citation of document, with indication, where appropriate, of the relevant passages | Relevant to claim No. |
| --- | --- | --- |
| X | CN 113727300 A (HUAWEI TECHNOLOGIES CO., LTD.) 30 November 2021 (2021-11-30) description, paragraphs [0100]-[0246] | 1-5, 12-16, 24-29 |
| X | CN 114640963 A (HUAWEI TECHNOLOGIES CO., LTD.) 17 June 2022 (2022-06-17) description, paragraphs [0087]-[0278] | 1-5, 12-16, 24-29 |
| X | OPPO. "Discussion on Remaining Issue of Sidelink Discovery" *3GPP TSG-RAN WG2 Meeting #116bis electronic R2-2200486,* 10 January 2022 (2022-01-10), section 2 | 1-5, 12-16, 24-29 |
| A | CN 111148233 A (TELECOMMUNICATIONS TECHNOLOGY RESEARCH INSTITUTE CO., LTD.) 12 May 2020 (2020-05-12) entire document | 1-29 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 October 2023** | **17 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | Publication date (day/month/year) |
|---|---|---|---|---|---|
| CN | 113727300 | A | 30 November 2021 | None | |
| CN | 114640963 | A | 17 June 2022 | None | |
| CN | 111148233 | A | 12 May 2020 | None | |

Form PCT/ISA/210 (patent family annex) (July 2022)

**EP 4 546 918 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210957879